# EUROPEAN PATENT SPECIFICATION

(11) **EP 4 074 396 B1**
(45) Date of publication and mention of the grant of the patent: **09.07.2025**
(21) Application number: 21190324.0
(22) Date of filing: 09.08.2021
(51) Int. Cl.: B01D 25/127, B01D 25/34

(54) **AUTOMATIC CLOTH-VIBRATING AND CAKE-REMOVING TRAILER AND CORRESPONDING AUTOMATIC CLOTH-VIBRATING AND CLOTH-WASHING COMPATIBLE FILTER PRESS**
AUTOMATISCHER TUCHVIBRATIONS- UND KUCHENENTFERNUNGSANHÄNGER UND ENTSPRECHENDE AUTOMATISCHE TUCHVIBRATIONS- UND TUCHWASCHKOMPATIBLE FILTERPRESSE
REMORQUE AUTOMATIQUE D'ÉLIMINATION DE GÂTEAU ET DE VIBRATION DU TISSU DE FILTRATION ET FILTRE-PRESSE COMPATIBLE POUR LA VIBRATION ET LE LAVAGE DU TISSU DE FILTRATION

(30) Priority: 15.04.2021 CN 202110402881
(43) Date of publication of application: 19.10.2022
(73) Proprietor: Jingjin Equipment Inc., Dezhou City, Shandong Province 253000 (CN)
(72) Inventor: LIU, Dongling, Dezhou City, 253000 (CN); JIANG, Guiting, Dezhou City, 253000 (CN); CHEN, Fengkui, Dezhou City, 253000 (CN); LIANG, Jinlong, Dezhou City, 253000 (CN)
(74) Representative: Zacco Norway AS

(56) References cited:
- EP-A1- 2 452 736
- CN-A- 112 044 129
- CN-A- 112 892 012
- GB-A- 2 046 117
- US-A- 4 209 404

## Description

### TECHNICAL FIELD

The present disclosure belongs to the technical field of automatic cake-removing filter presses (Int. Cl. B01D25/12), and relates to a cloth-vibrating auxiliary cake-removing trailer capable of automatically pulling open a filter plate cloth-vibrating and cake-removing mechanism.

### BACKGROUND ART

The filter press is pressure filtration equipment with multi-filter-chamber intermittent operation; the automatic filter press is a filter press which integrates machine, electricity and liquid and is intelligently controlled by a PLC (Programmable Logic Controller); the automatic cake-removing filter press is an auxiliary cake-removing filter press capable of automatically pulling open filter plates and vibrating cloth, and mainly consists of a double-beam rack, a filter plate pressing mechanism, a multi-filter-chamber filtering mechanism, a pull-plate cake discharging mechanism, a cloth vibrating device of the pull-plate cake discharging mechanism, a liquid receiving plate overturning mechanism and a PLC program control system; a plurality of filter plates are arranged and mounted on double beams of the rack, and concave parts of the pressed adjacent filter plates form a filter chamber; and the automatic cake-removing filter press is suitable for solid-liquid separation of various viscous suspension solutions.

The pull-plate cake discharging mechanism, namely a cloth-vibrating auxiliary cake-removing mechanism capable of automatically pulling open filter plates, mainly consists of a pull-plate driving motor, pull-plate trolleys, guide rails of the pull-plate trolleys, a chain transmission device, an automatic cloth-vibrating and cake-removing device and a sensor, and the pull-plate trolleys are placed on two trolley guide rails of the double-beam rack; the automatic cloth-vibrating and cake-removing device comprises a vehicle-mounted pneumatic vibrating device and elastic cloth-vibrating devices, and is positioned at the upper part of the filter press; the vehicle-mounted pneumatic vibrating device belongs to a complete machine shared vehicle-mounted vibrating power device, is fixedly mounted on the pull-plate trolleys on the two sides of the filter press (the vibrating air cylinders are aligned with the elastic cloth-vibrating devices), and synchronously moves along with the pull-plate trolleys; the elastic cloth-vibrating devices are cloth-vibrating executive devices with same quantity of the filter plates; and the pull-plate cake discharging mechanism has the functions of automatic pull-plate cake discharging and automatic cloth vibration and cake removal.

The lifting type cloth washing mechanism, namely an automatic lifting type filter cloth washing mechanism, is an on-line automatic washing device for filter cloth wrapped on the filter plates by utilizing high-pressure water irregularly (when necessary), and is positioned at the upper part of the filter press; the lifting type cloth washing mechanism mainly consists of a lifting cloth washing trolley, a trolley guide rail support, a trolley limiting device and the like; the lifting type cloth washing trolley comprises a movable trolley frame, a lifting pipeline, a washing transverse pipe and a driving motor; the cleaning process of the filter cloth is as follows: under the control of the PLC control system, the pull-plate trolleys pull open the filter plates automatically and discharge materials, and the filter plates are continuously pulled to clean positions; the lifting type cloth washing mechanism and the pull-plate trolleys synchronously operate and automatically lift, and the filter cloth is automatically washed and smoothed by high-pressure water through the lifting pipeline and the washing transverse pipe; and the lifting type cloth washing mechanism has the functions of automatically cleaning the filter cloth and washing and regenerating the filter cloth.

An existing automatic cloth-vibrating and cake-removing device has the defects that a main body (namely a vehicle-mounted pneumatic vibrating device) of the automatic cloth-vibrating and cake-removing device is fixedly mounted on pull-plate trolleys on the two sides of a pull-plate cake discharging mechanism, and main body frames of the automatic cloth-vibrating and cake-removing device and the automatic filter cloth cleaning mechanism are both positioned on the upper part of a filter press, namely the automatic cloth-vibrating and cake-removing device hinders normal cloth washing of the automatic filter cloth cleaning mechanism (hinders lifting of the cloth washing trolley), the automatic cloth-vibrating and cake-removing device and the automatic filter cloth cleaning mechanism interfere with each other and are not compatible with each other, and only one of cloth vibration and cloth washing is selected; therefore, the automatic cake-removing filter press lacks an automatic cloth washing function, filter cloth needs to be manually washed irregularly, and the automation level and the production efficiency of the filter press are affected; and compatibility of cloth vibration and cloth washing is a technical problem that people want to solve but cannot achieve success all the time.

Chinese Patent Application CN112044129A possessed by the Applicant discloses an automatic cloth-vibrating cake-removing device and a corresponding automatic cake-removing filter press. The innovative scheme is characterized in that an automatic cloth vibrating and cake removing device is additionally arranged on the basis of an existing pulling plate trolley. The automatic cloth-vibrating and cake-removing device comprises a movable pneumatic vibrating device and a telescopic filter cloth hanging device which are installed on a double-pulling-plate trolley and each filter plate respectively, and a vibrating air cylinder is aligned with a cloth vibrating assembly; meanwhile, the filter cloth is hung on the telescopic filter cloth hanging device in a penetrating manner; the cloth vibration cake-removing device synchronously moves along with the pulling-plate trolley, a filter cloth suspension device is pneumatically vibrated, so that the filter cloth is automatically vibrated and shaken, and the vibration force assists the gravity to realize thorough cake discharging. The automatic cake-removing machine has the advantages of automatic cake removing, thorough cake discharging, labor saving and efficiency improving. According to the filter press, the cloth vibration cake-removing device is used, and the technical problems that viscous filter cakes cannot be completely discharged through gravity, the auxiliary cake discharging effect of a vibration plate is poor, the manual auxiliary cleaning efficiency is low, and cloth is prone to being damaged are solved; the automatic cake removing performance and the production efficiency of the filter press are improved.

### SUMMARY

The present disclosure aims to overcome the defects of an existing automatic cloth-vibrating and cake-removing device, and solve the technical problems that a main body of the automatic cloth-vibrating and cake-removing device is fixedly mounted on the two pull-plate trolleys, normal work of an automatic filter cloth cleaning mechanism is hindered, an automatic cake-removing filter press loses an automatic cloth cleaning function, and cloth vibration and cloth cleaning are incompatible. The present disclosure provides an automatic cloth-vibrating and cake-removing trailer and a corresponding automatic cloth-vibrating and cloth-washing compatible filter press. The automatic cloth-vibrating and cake-removing trailer refers to an automatic cloth-vibrating and auxiliary cake-removing moving device hung on the two pull-plate trolleys; and the corresponding automatic cloth-vibrating and cloth-washing compatible filter press refers to an automatic cloth-vibrating and cloth-washing compatible filter press provided with the automatic cloth-vibrating and cake-removing trailer, and is called for short due to the limited number of the patent name.

According to the innovative technical scheme adopted for solving the technical problems in the prior art, the automatic cloth-vibrating and cake-removing trailer (hereinafter referred to as the cloth-vibrating and cake-removing trailer) has the key points of overall technological scheme that compared with the prior art, the innovative overall structure has the outstanding substantive characteristics that on the basis of an existing pull-plate cake discharging mechanism, a vehicle-mounted pneumatic vibrating device is improved into a trailer type pneumatic vibrating device: (1) movable trailer seats are creatively additionally arranged, so that the trailer type pneumatic vibrating device can be hung on the two pull-plate trolleys to work, and the trailer type pneumatic vibrating device can also be unhooked (separated from the two pull-plate trolleys) and stopped at the edge of a machine tailstock when necessary, so that normal work of the automatic filter cloth cleaning mechanism is not hindered, and the compatibility of automatic cloth vibration and cloth washing of the filter press is realized; (2) cantilever type air cylinder platforms are adaptively additionally arranged, two vibrating air cylinders are aligned with and vibrate elastic cloth-vibrating devices and reset springs, and the elastic cloth-vibrating devices automatically reset, so that residual sticky cakes on the filter cloth are vibrated and shaken, and automatic cake removal is realized; and therefore, the technical problems that the main body of the automatic cloth-vibrating and cake-removing device is fixedly mounted on the two pull-plate trolleys, normal work of the automatic filter cloth cleaning mechanism is hindered, the automatic cake-removing filter press loses the automatic cloth cleaning function, and cloth vibration and cloth cleaning are incompatible are solved. The specific design scheme is as follows:

Construction of main components is as follows: the cloth-vibrating and cake-removing trailer mainly consists of a trailer type pneumatic vibrating device which is hang on two pull-plate trolleys and elastic cloth-vibrating devices; (1) the trailer type pneumatic vibrating device comprises movable trailer seats, a gate-type trailer frame, cantilever type air cylinder platforms, two vibrating air cylinders, two air storage tanks, two electromagnetic valves and a three-way joint; and (2) each elastic cloth-vibrating device comprises a cloth vibrating seat, a telescopic column, a cloth hanging rod assembly and a reset spring.

Shapes and construction of innovative parts are as follows. (1) Each movable trailer seat comprises a trailer seat main body, a wear-resistant block; a pull-plate induction plate and a trailer pin assembly; the trailer seat main bodies are double-square-shaped trailer sleeve seats with left openings, the inner diameter of each trailer seat main body is matched with each of the pull-plate trolley slide ways, and a length of each trailer seat main body is greater than a width (thickness) of the gate-type trailer frame. Each wear-resistant block is a groove-shaped wear-resistant block, an groove opening of the wear-resistant block is in clearance fit with the corresponding pull-plate trolley slide way, a length of each wear-resistant block corresponds to the inner diameter of the trailer seat main body, and each wear-resistant block is formed by polypropylene injection molding; the pull-plate induction plates are angle steel type induction plates, two mounting holes are formed in the upper edge of each pull-plate induction plate, and the widths of the front edges are larger than the wall thicknesses of the trailer seat bodies; each trailer pin assembly comprises trailer connecting lugs and a trailer connecting pin, the trailer connecting lugs are a pair of connecting lugs, and connecting pin inserting holes are formed in the trailer connecting lugs; (2) The gate-type trailer frame is a double-layer gate-type frame, a connecting plate is arranged between two layers of the double-layer gate-type frame, triangular stabilizing plates are arranged at a left upper corner and a right upper corner, a width of the gate-type trailer frame corresponds to a distance between the two pull-plate trolley slide ways, a height of the gate-type trailer frame adapts to the vibrating air cylinders to vibrate the elastic cloth-vibrating devices, and a stainless steel square tube material is adopted; and vibrating air cylinder mounting holes are formed in the cantilever type air cylinder platforms, arm lengths of the cantilever type air cylinder platforms adapt to the vibrating air cylinders and can be aligned with the elastic cloth-vibrating devices, and the stainless steel square tube material is adopted. (3) The two vibrating air cylinders are SC40* 100S type air cylinders; the two air storage tanks are of closed barrel body structures, quick coupling mounting holes are formed in two ends of each air storage tank; the two electromagnetic valves are 4v210-08 type electromagnetic valves; and (4) each cloth hanging rod assembly comprises a filter cloth penetrating and hanging rod, a cloth pulling rod and a cloth hanging rod sleeve; and double sleeve holes are formed in the double hanging rod sleeves, and the hole diameters of the double hanging rod sleeves correspond to the outer diameters of the filter cloth penetrating and hanging rods.

The connection relation of main parts and components is as follows: in order to facilitate description, filter plates, filter cloth and pull-plate trolleys closely related to the present disclosure are additionally arranged. (1) Assembly of the trailer type pneumatic vibrating device: the wear-resistant blocks are mounted at an upper part in the trailer seat main bodies, and the pull-plate induction plates are mounted on the trailer seat main bodies and block the wear-resistant blocks from sliding outwards; the gate-type trailer frame is welded on the movable trailer seats and extends in a vertical direction; the cantilever type air cylinder platforms are welded and perpendicular to said gate-type trailer frame, and extend in a horizontal direction; the two vibrating air cylinders are aligned with the elastic cloth-vibrating devices, and one of the two vibrating air cylinders (5) is vertically mounted on each of the cantilever type air cylinder platforms; the three-way joint is centrally mounted on the gate-type trailer frame and is externally connected with a high-pressure gas input hose; each of the two electromagnetic valves and each of the two gas storage tanks are sequentially mounted between respectively one of the vibrating air cylinders and the three-way joint; the pneumatic elements are connected through air conveying hoses, and the two electromagnetic valves are externally connected with a PLC program control cabinet; each of the two trailer connecting lugs is welded to either side of a corresponding one of the movable trailer seats and either side of a corresponding one of the pull-plate trolleys in a matched mode, and trailer connecting pins are inserted into connecting pin inserting holes of the two trailer connecting lugs. (2) Assembly of the elastic cloth-vibrating devices: the two cloth vibrating seats are mounted on each side of an upper end of the filter plates, the telescopic columns are mounted in the cloth vibrating seats, the reset springs sleeve the telescopic columns, the cloth hanging rod sleeves of the cloth hanging rod assemblies are mounted on the telescopic columns, the filter cloth is hung on the filter cloth penetrating and hanging rod, the filter cloth penetrating and hanging rod is mounted in the double cloth hanging rod sleeves, and the cloth pulling rod is mounted at a lower end of the filter cloth in a penetrating mode. (3) The trailer type pneumatic vibrating device is placed on two pull-plate trolley slide ways, is hung on the two pull-plate trolleys through the trailer pin assemblies and can synchronously move along with the two pull-plate trolleys. When necessary, the pneumatic vibrating device can also be unhooked and stopped at an edge of a machine tailstock; and the trailer type pneumatic vibrating device has functions of automatic cloth vibration, automatic cake removal and unhooking.

The principle and process of automatic cloth vibration and cloth washing compatibility are as follows: (1) under the control of the PLC program control system, after materials are filtered, a filter plate pressing mechanism loosens a filter chamber, the two pull-plate trolleys automatically pull open the filter plates one by one, and gravity cake discharging (most filter cakes on filter cloth fall off automatically and sticky filter cakes are uncleanly discharged by gravity) is realized; (2) simultaneously, the automatic cloth-vibrating and cake-removing trailer synchronously moves along with the pull-plate trolleys, when the pull-plate trolleys pause in place during plate pulling, the trailer type pneumatic vibrating device is automatically started, the vibrating air cylinders vibrate the elastic cloth-vibrating devices, and the reset springs automatically reset the elastic cloth-vibrating devices, so that residual sticky cakes on the filter cloth are vibrated and shaken, and automatic cake removal is achieved, namely vibration force assists gravity to thoroughly discharge cakes; the trailer type pneumatic vibrating device is closed in a limited time mode, and the vibrating frequency is adjustable; and (3) when necessary, the pneumatic vibrating device can also be unhooked (separated from the two pull-plate trolleys) and stopped at the edge of the machine tailstock, normal work of the automatic filter cloth cleaning mechanism is not hindered, and compatibility of automatic cloth vibration and cloth washing of the filter press is realized.

The present disclosure also provides an automatic cloth-vibrating and cloth-washing compatible filter press which is an automatic filter press compatible with cloth vibration and cloth washing, and the automatic cloth-vibrating and cake-removing trailer provided by the present disclosure is used for the filter press; the filter press mainly consists of a double-beam rack, a filter plate pressing mechanism, a multi-filter-chamber filtering mechanism, a pull-plate cake discharging mechanism, a cloth-vibrating and cake-removing trailer of the pull-plate cake discharging mechanism, a lifting type cloth washing mechanism, a liquid receiving plate overturning mechanism and a PLC program control system; and the cloth-vibrating and cake-removing trailer has multiple functions of automatically pulling open the filter plates, automatically vibrating cloth to assist cake removal and automatically cleaning the filter cloth.

The automatic cloth-vibrating and cake-removing trailer and the corresponding automatic cloth-vibrating and cloth-washing compatible filter press provided by the present disclosure have the remarkable advantages that the structure is optimized, plate pulling is automatic, cloth vibration and cloth washing are compatible synchronously, multiple functions are achieved, and unhooking is convenient; the filter press has the beneficial effects that a vehicle-mounted pneumatic vibrating device is improved into a trailer type pneumatic vibrating device, so that the trailer type pneumatic vibrating device can be hung on the two pull-plate trolleys to work, and the trailer type pneumatic vibrating device can also be unhooked and stopped at the edge of the machine tailstock when necessary, so that normal work of the automatic filter cloth cleaning mechanism is not hindered, and the compatibility of automatic cloth vibration and cloth cleaning of the filter press is realized; the automation level and the production efficiency of the filter press are improved; the blank of the automatic cloth-vibrating and cloth-washing compatible type filter press in China is filled, and the filter press is developed in the direction of an automatic cake-removing filter press for viscous materials.

### BRIEFT DESCRIPTION OF THE DRAWINGS

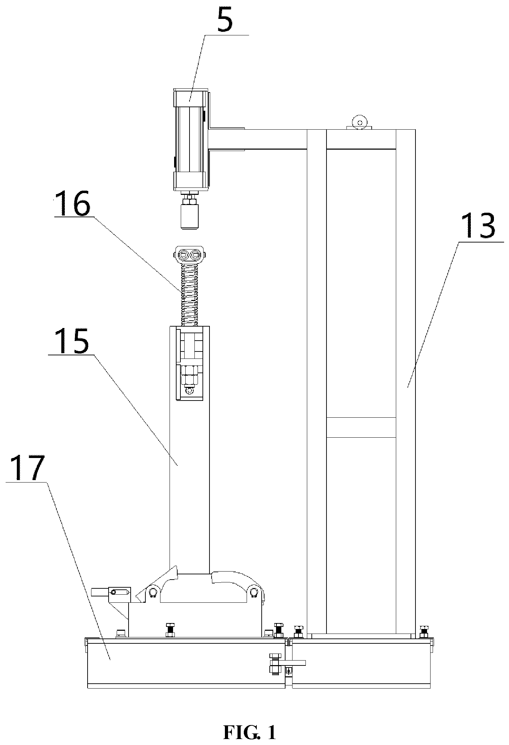

FIG. 1 is a hooking schematic diagram of an automatic cloth-vibrating and cake-removing trailer and pull-plate trolleys in the present disclosure.

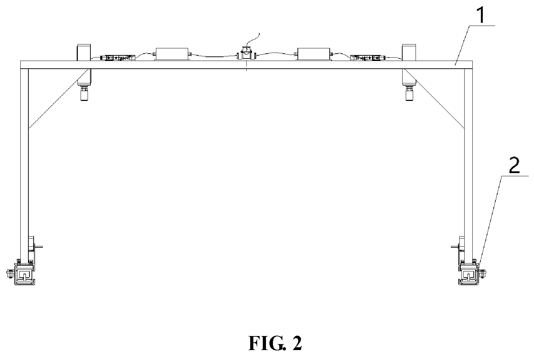

FIG. 2 is a front view schematic diagram of a trailer type pneumatic vibrating device of the automatic cloth-vibrating and cake-removing trailer in the present disclosure.

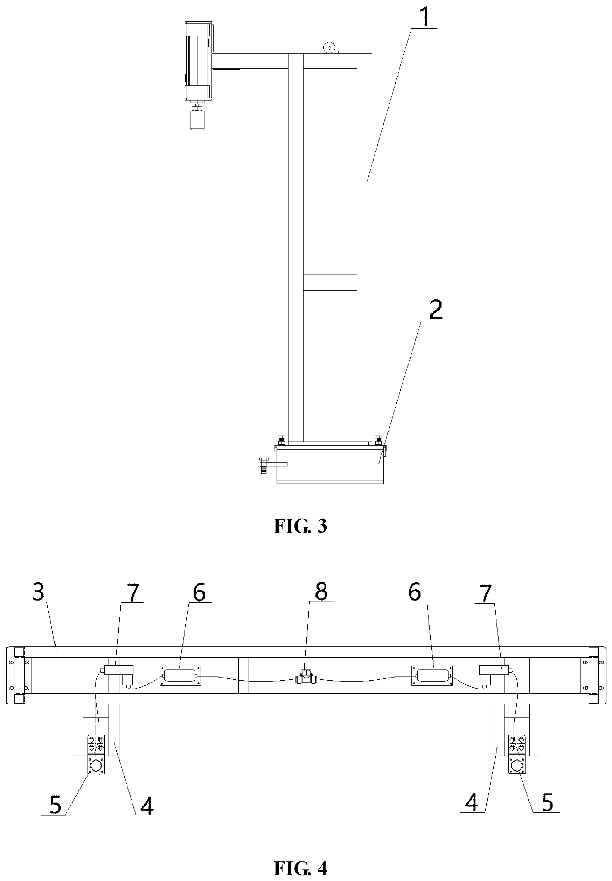

FIG. 3 is a side view schematic diagram of the trailer type pneumatic vibrating device of the automatic cloth-vibrating and cake-removing trailer in the present disclosure.
FIG. 4 is a top view schematic diagram of the trailer type pneumatic vibrating device of the automatic cloth-vibrating and cake-removing trailer in the present disclosure.

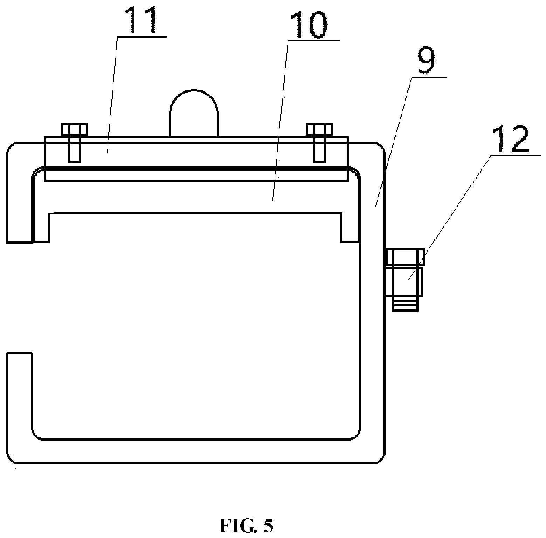

FIG. 5 is a schematic diagram of a movable trailer seat of the automatic cloth-vibrating and cake-removing trailer in the present disclosure.

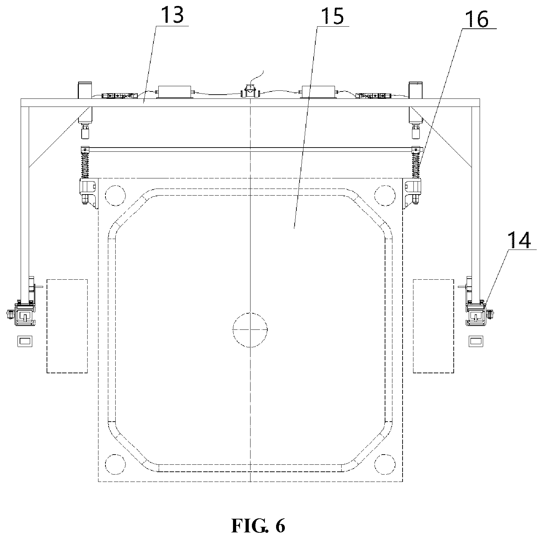

FIG. 6 is an assembled schematic diagram (including components closely related to the automatic cloth-vibrating and cake-removing trailer) of the automatic cloth-vibrating and cake-removing trailer in the present disclosure.

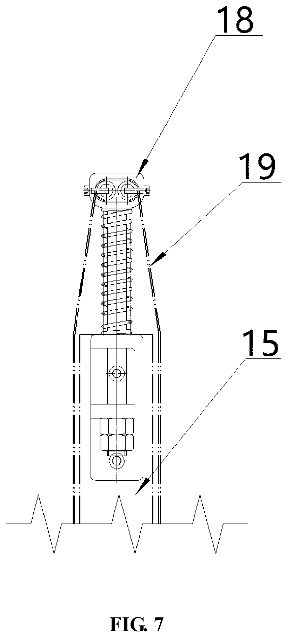

FIG. 7 is a schematic diagram (including components closely related to an elastic cloth-vibrating device) of the elastic cloth-vibrating device of the automatic cloth-vibrating and cake-removing trailer in the present disclosure.

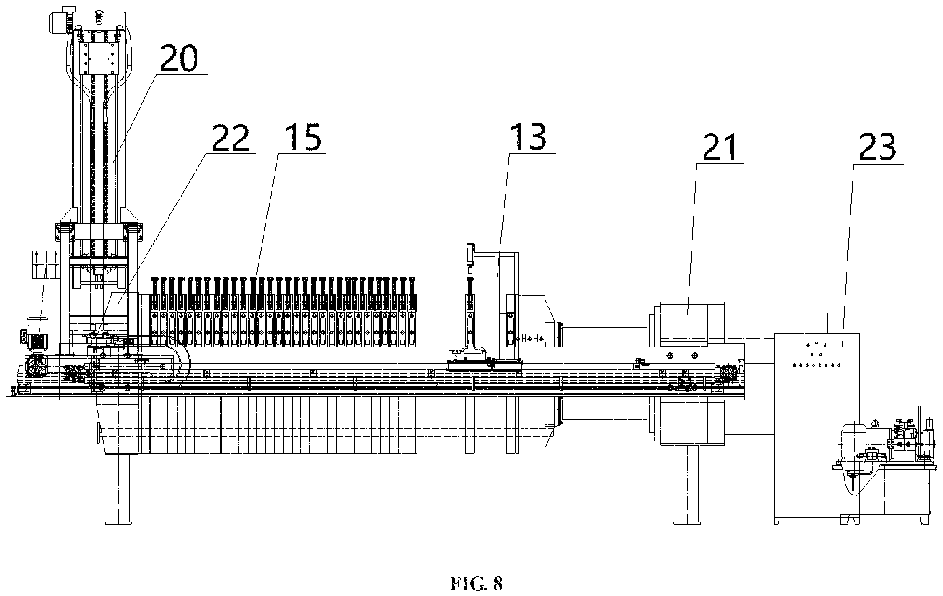

FIG. 8 is a finally assembled schematic diagram of the automatic cloth-vibrating and cake-removing trailer and an automatic cloth-vibrating and cloth-washing compatible filter press in the present disclosure.

Reference signs in drawings: 1, trailer type pneumatic vibrating device (namely automatic cloth-vibrating and cake-removing trailer main body); 2, movable trailer seat; 3, gate-type trailer frame; 4, cantilever type air cylinder platform; 5, vibrating air cylinder; 6, air storage tank; 7, electromagnetic valve; 8, three-way joint; 9, trailer seat main body; 10, wear-resistant block; 11, pull-plate induction plate; 12, trailer pin assembly;13, automatic cloth-vibrating and cake-removing trailer (the present disclosure); 14, pull-plate trolley slide way; 15, filter plate; 16, elastic cloth-vibrating device (namely automatic cloth-vibrating and cake-removing trailer split body); 17, pull-plate trolley; 18, cloth hanging rod assembly; 19, filter cloth; 20, automatic cloth washing mechanism (namely lifting type cloth washing mechanism); 21, machine tailstock; 22, thrust plate; and 23, PLC program control system (namely PLC program control cabinet).

### DETAILED DESCRIPTION OF THE EMBODIMENTS

The following clearly and completely describes the technical scheme in the embodiments of the present disclosure with reference to the attached figures in the embodiments of an automatic cloth-vibrating and cake-removing trailer and a corresponding automatic cloth-vibrating and cloth-washing compatible filter press in the present disclosure. Apparently, the described embodiments are merely a part rather than all of the embodiments of the present disclosure. All other embodiments, such as the automatic cloth-vibrating and cake-removing trailer with same cloth-vibrating and cake-removing compatible principle and similar structure, obtained by those skilled in the art based on the embodiments of the present disclosure without creative efforts shall fall within the protection scope of the present disclosure.

### Embodiment I

The key points of innovative total embodiments of automatic cloth-vibrating and cake-removing trailer 13 (cloth-vibrating and cake-removing trailer for short) are as follows: a vehicle-mounted pneumatic vibrating device is improved into a trailer type pneumatic vibrating device 1 on the basis of an existing pull-plate cake discharging mechanism: (1) movable trailer seats 2 are creatively additionally arranged, so that the trailer type pneumatic vibrating device 1 can be hung on two pull-plate trolleys 17 to work; if necessary, the pneumatic vibrating device 1 can also be unhooked (separated from the two pull-plate trolleys 17) and stopped at the edge of a machine tailstock 21, normal work of the automatic filter cloth cleaning mechanism 20 is not hindered, and compatibility of automatic cloth vibration and cloth cleaning of the filter press is achieved; and (2) the cantilever type air cylinder platforms 4 are adaptively added, so that the vibrating air cylinders 5 are aligned with and vibrate elastic cloth-vibrating devices 16, and the elastic cloth-vibrating devices 16 are automatically reset by reset springs, so that residual sticky cakes on the filter cloth 19 are vibrated and shaken, and automatic cake removal is realized.

Through specific embodiments, the cloth-vibrating and cake-removing trailer 13 mainly consists of the trailer type pneumatic vibrating device 1 and the elastic cloth-vibrating devices 16; (1) the trailer type pneumatic vibrating device 1 comprises movable trailer seats 1, a gate-type trailer frame 3, cantilever type air cylinder platforms 4, vibrating air cylinders 5, air storage tanks 6, electromagnetic valves 7 and a three-way joint 8; (2) each elastic cloth-vibrating device 16 comprises a cloth vibrating seat, a telescopic column, a cloth hanging rod assembly and a reset spring; the trailer type pneumatic vibrating device 1 is placed on two pull-plate trolley slide ways 14, is hung on the two pull-plate trolleys 17 through the trailer pin assemblies 12 and can synchronously move along with the two pull-plate trolleys 17; when necessary, the pneumatic vibrating device 1 can also be unhooked and stopped at the edge of a machine tailstock 21; and the trailer type pneumatic vibrating device has the functions of automatic cloth vibration, automatic cake removal and unhooking. The detailed description is as follows:

Each movable trailer seat 2 comprises a trailer seat main body 9, a wear-resistant block 10, a pull-plate induction plate 11 and a trailer pin assembly 12, the movable trailer seats 2 sleeve the pull-plate trolley slide ways 14, and the movable trailer seats 2 are used for bearing the weight of and guiding the cloth-vibrating and cake-removing trailer 13 and hooking the pull-plate trolleys 17.

The trailer seat main bodies 9 are double-square-shaped trailer sleeve seats with left openings, the inner diameters of the trailer seat main bodies 9 are matched with the square pull-plate trolley slide ways 14, and the lengths of the trailer seat main bodies 9 are greater than the width (thickness) of the gate-type trailer frame 4; and the trailer seat main bodies 9 are used for mounting the assemblies of the movable trailer seats 2 and bearing the weight of the gate-type trailer frame 3.

The wear-resistant blocks 10 are groove-shaped wear-resistant blocks, groove openings of the wear-resistant blocks 10 are in clearance fit with the pull-plate trolley slide ways 14, the lengths of the wear-resistant blocks 10 correspond to the inner diameters of the trailer seat main bodies 9, and the wear-resistant blocks 10 are formed by polypropylene injection molding; and the wear-resistant blocks 10 are mounted at the upper parts in the trailer seat main bodies 9 and used as sliding parts of the cloth-vibrating and cake-removing trailer 13.

The pull-plate induction plates 11 are angle steel type induction plates, double mounting holes are formed in the upper edge of each pull-plate induction plate, and the widths of the front edges are larger than the wall thicknesses of the trailer seat bodies 9; and the pull-plate induction plates 11 are mounted on the trailer seat main bodies 9, and the pull-plate induction plates 11 are used for blocking the wear-resistant blocks 10 from sliding outwards and used as induction points of a pull-plate travel inductor.

Each trailer pin assembly 12 comprises trailer connecting lugs and a trailer connecting pin, the trailer connecting lugs are a pair of connecting lugs, and connecting pin inserting holes are formed in the trailer connecting lugs; and two trailer connecting lugs are welded to the sides of the movable trailer seats 2 and the pull-plate trolleys 17 in a matched mode, and trailer connecting pins are inserted into the connecting pin inserting holes of the two trailer connecting lugs; and the trailer pin assemblies 12 are used for hooking the pull-plate trolleys 17.

The gate-type trailer frame 3 is a double-layer gate-type frame, a connecting plate is arranged between the two layers, triangular stabilizing plates are arranged at the left upper corner and the right upper corner, the width of the gate-type trailer frame 3 corresponds to the distance between the two pull-plate trolley slide ways 14, the height of the gate-type trailer frame 3 adapts to the vibrating air cylinders 5 to vibrate the elastic cloth-vibrating devices 16, and a stainless steel square tube material is adopted; the gate-type trailer frame 3 is vertically welded on the movable trailer seats 2; and the gate-type trailer frame 3 is used for mounting pneumatic elements of the pneumatic vibrating device 1 at high positions.

Vibrating air cylinder mounting holes are formed in the cantilever type air cylinder platforms 4, the arm lengths of the cantilever type air cylinder platforms 4 adapt to the vibrating air cylinders 5 and can be aligned with the elastic cloth-vibrating devices 16, and the stainless steel square tube material is adopted; the cantilever type air cylinder platforms 4 are horizontally welded on the gate-type trailer frame 3; and the cantilever type air cylinder platforms 4 are used for mounting the vibrating air cylinders 5 in a cantilever mode, so that the vibrating air cylinders 5 are aligned with the elastic cloth-vibrating devices 16.

The vibrating air cylinders 5 are SC40*100S type air cylinders; the air storage tanks 6 are of closed barrel body structures, quick coupling mounting holes are formed in the two ends of each air storage tank 6; by using vibrating air cylinder seats, the vibrating air cylinders 5 are aligned with the elastic cloth-vibrating devices 16, and are vertically mounted on the cantilever type air cylinder platforms 4; and the vibrating air cylinders 5 are used for providing power for vibrating filter cloth 19.

The air storage tanks 6 are of closed barrel body structures, quick coupling mounting holes are formed in the two ends of each air storage tank 6, and the stainless steel material is adopted; the air storage tanks 6 are mounted between the electromagnetic valves 7 and the three-way joint 8; and the air storage tanks 6 are used for storing and supplying stable high-pressure gas at a short distance.

The electromagnetic valves 7 are 4v210-08 type electromagnetic valves; and the electromagnetic valves 7 are mounted between the vibrating air cylinders 5 and the air storage tanks 6, are externally connected with a PLC program control cabinet 23 and are used for controlling the vibrating air cylinders 5 to work by switching high-pressure airflow pipelines, and the vibrating frequency is adjustable.

The three-way joint 8 is centrally mounted on the gate-type trailer frame 3, and is externally connected with a high-pressure gas input hose; and the three-way joint 8 is used for shunting high-pressure gas.

The elastic cloth-vibrating devices 16 are mounted at the upper ends on two sides of filter plates, are used for hanging the filter cloth 19 in a penetrating mode, and are matched with the trailer type pneumatic vibrating device 1 to automatically vibrate and shake the filter cloth 19, so that automatic cake removal is realized.

Telescopic column gap mounting deep holes are formed in the cloth vibrating seats, and the two cloth vibrating seats are mounted at the upper ends of the two sides of each filter plate 15 and used for mounting the telescopic columns and the reset springs.

Cloth hanging rod assembly mounting holes are formed in the telescopic columns, the outer diameters of the telescopic columns correspond to the hole diameters of the cloth vibrating seats, and the telescopic columns are mounted in the gap mounting deep holes of the cloth vibrating seats and used for elastically supporting the cloth hanging rod assemblies 18.

Each cloth hanging rod assembly 18 comprises a filter cloth penetrating and hanging rod, a cloth pulling rod and a cloth hanging rod sleeve; and the cloth hanging rod assemblies 18 are used for penetrating and hanging the filter cloth 10 on double faces of the filter plates 15 and tensioning the filter cloth 19 by gravity.

The filter cloth penetrating and hanging rods and the cloth pulling rods are stainless steel tubes, the lengths of the filter cloth penetrating and hanging rods and the cloth pulling rods are larger than the width of filter cloth 19, the filter cloth 19 is hung on the filter cloth penetrating and hanging rods in the penetrating mode, the filter cloth penetrating and hanging rods are mounted in the double cloth hanging rod sleeves, and the cloth pulling rods penetrate through the lower end of the filter cloth 19; and the filter cloth penetrating and hanging rods and the cloth pulling rods are used for penetrating and hanging the filter cloth 19 and tensioning the filter cloth 19 by gravity.

Double sleeve holes are formed in the double hanging rod sleeves, the hole diameters of the double hanging rod sleeves correspond to the outer diameters of the filter cloth penetrating and hanging rods, and the cloth hanging rod sleeves are mounted at the upper ends of the telescopic columns and are used for mounting the double filter cloth penetrating and hanging rods.

The inner diameters of the reset springs correspond to the outer diameters of the telescopic columns, the lengths of the springs correspond to the design expansion and contraction quantity of the telescopic columns, and the reset springs sleeve the telescopic columns and are used for elastically tensioning the filter cloth 19 and resetting the elastic cloth-vibrating devices 16.

The automatic cloth-vibrating and cake-removing trailer 13 provided by the present disclosure has the advantages that the structure is optimized, cloth vibration and cloth washing are compatible, multiple functions are achieved, and unhooking is convenient; the technical problems that a main body of an automatic cloth-vibrating and cake-removing device is fixedly mounted on the two pull-plate trolleys 17, normal work of the automatic filter cloth cleaning mechanism 20 is hindered, an automatic cake-removing filter press loses an automatic cloth cleaning function, and cloth vibration and cloth cleaning are incompatible are solved; and the automation level and the production efficiency of the filter press are improved.

### Embodiment II

An automatic cloth-vibrating and cloth-washing compatible filter press is an automatic filter press compatible with cloth vibration and cloth washing, and the automatic cloth-vibrating and cake-removing trailer 13 provided by the present disclosure is used for the filter press; the filter press mainly consists of a double-beam rack, a filter plate pressing mechanism, a multi-filter-chamber filtering mechanism, a pull-plate cake discharging mechanism, a cloth-vibrating and cake-removing trailer 13 of the pull-plate cake discharging mechanism, a lifting type cloth washing mechanism 20, a liquid receiving plate overturning mechanism and a PLC program control system 23; and the filter press is applicable for solid-liquid separation of various viscous suspension solutions. Common technical parts of the present disclosure in the prior art are manufactured according to the current standard JB/T4333 of the mechanical industry of China, namely "part one: type and basic parameters in compartment type filter press and plate-and-frame filter press", "part two: technical conditions", "part three: filter plate" and "part four: diaphragm filter plate".

The pull-plate cake discharging mechanism, namely a cloth-vibrating and cake-removing mechanism capable of automatically pulling open the filter plates, mainly consists of a pull-plate driving motor, pull-plate trolleys 17, guide rails of the pull-plate trolleys 17, a chain transmission device, the automatic cloth-vibrating and cake-removing trailer 13 (comprising the trailer type pneumatic vibrating device 1 and the elastic cloth-vibrating devices 16) and a sensor; and the pull-plate cake discharging mechanism has the functions that the filter plates 15 can be automatically pulled open and automatic cloth vibration to assist cake removal and unhooking are achieved.

Assembly and final assembly of the pull-plate cake discharging mechanism are as follows: (1) the driving motor is mounted on a machine head or a machine tail (preferably mounted on the machine head), the pull-plate trolleys 17 are mounted on trolley slide ways 14 on two sides of double main beams, and a two-stage transmission chain is connected with a driving device and the pull-plate trolleys 17; (2) the trailer type pneumatic vibrating device 1 is arranged on the double pull-plate trolley slide ways 14 at the end of the machine tailstock 21, and is hung on the two pull-plate trolleys 17 through the trailer pin assemblies 12; and the elastic cloth-vibrating devices 16 are mounted at the upper ends of two sides of the filter plates 15, the vibrating air cylinders 5 are aligned with the elastic cloth-vibrating devices 16, and the sensor communicates with the PLC control system 23.

The working process of the pull-plate cake discharging mechanism is as follows: (1) under the control of the PLC system 23, the driving motor drives pull-plate trolleys 17 on the two sides to synchronously move back and forth through the two-stage transmission chain, the automatic cloth-vibrating and cake-removing trailer 13 synchronously moves along with the pull-plate trolleys 17, manipulators of the pull-plate trolleys 17 automatically pulls open the filter plates 15 one by one to discharge cakes, and the automatic cloth-vibrating and cake-removing trailer 13 generates vibration force to assist gravity to realize thorough cake removal; and (2) when necessary, the pneumatic vibrating device 1 can also be unhooked (separated from the two pull-plate trolleys 17) and stopped at the edge of the machine tailstock 21, normal work of the automatic filter cloth cleaning mechanism 20 is not hindered, and the compatibility of automatic cloth vibration and cloth cleaning of the filter press is realized.

The lifting type cloth washing mechanism 20, namely an automatic lifting type filter cloth washing mechanism, is an on-line automatic washing device for filter cloth 19 wrapped on the filter plates 15 by utilizing high-pressure water irregularly (when necessary), and is positioned at the upper part of the filter press; the lifting type cloth washing mechanism 20 mainly consists of a lifting cloth washing trolley, a trolley guide rail support, a trolley limiting device and the like; the lifting type cloth washing trolley comprises a movable trolley frame, a lifting pipeline, a washing transverse pipe and a driving motor; the lifting type cloth washing trolley is mounted on the trolley guide rail support on the two sides of the double main beams beside a machine head thrust plate; and the lifting type cloth washing mechanism 20 has the functions of automatically cleaning the filter cloth and washing and regenerating the filter cloth.

The working process of the lifting type cloth washing mechanism 20 is as follows: (1) after the filter press automatically removes cakes, the automatic cloth-vibrating and cake-removing trailer 13 and the two pull-plate trolleys 17 are unhooked and stopped at the edge of the machine tailstock 21 when necessary, and under the control of the PLC control system 23, the pull-plate trolleys 17 automatically pull open the filter plates 15 to a cleaning position one by one (the limiting device acts); and (2) the lifting type cloth washing mechanism 20 and the pull-plate trolleys 17 synchronously operate and automatically lift, and the filter cloth 19 is automatically washed and smoothed by high-pressure water through the lifting pipeline and the washing transverse pipe, so that the filtration speed of the filter cloth 19 is increased, and the service life of the filter cloth 19 is prolonged.

The filter press has multiple functions of automatically pulling open the filter plates 15, automatically vibrating cloth to assist cake removal and automatically cleaning the filter cloth 19; the single complete operation cycle of the filter press comprises the following steps: pressing the filter plates 15, performing feeding and filtration, performing plate overturning and liquid receiving, performing washing purification, back-blowing materials, performing blow-drying purification, pulling the plates to discharge cakes, vibrating cloth to remove cakes, and cleaning the filter cloth 19, and is automatically completed by one key under the control of the PLC program control system 23; and batch solid-liquid separation is realized through intermittent reciprocating cycle work.

The automatic cloth-vibrating and cloth-washing compatible filter press provided by the present disclosure has the beneficial effects that the vehicle-mounted pneumatic vibrating device is improved into the trailer type pneumatic vibrating device 1, so that the trailer type pneumatic vibrating device 1 can be hung on the two pull-plate trolleys 17 to work, the pneumatic vibrating device 1 can also be unhooked and stopped at the edge of the machine tailstock 21 when necessary, normal work of the automatic filter cloth cleaning mechanism 20 is not hindered, and compatibility of automatic cloth vibration and cloth cleaning of the filter press is realized; the technical problem that people always want to solve but cannot obtain successful compatibility of cloth vibration and cloth washing is solved; and the automation level and the production efficiency of the filter press are improved, and the energy is expanded and the efficiency is increased.

## Claims

1. An automatic cloth-vibrating and cake-removing trailer, comprising:
- a trailer type pneumatic vibrating device (1) and
- elastic cloth-vibrating devices (16),
A) wherein the trailer type pneumatic vibrating device (1) comprises:
- movable trailer seats (2),
- a gate-type trailer frame (3) welded on the movable trailer seats (2) and which extends in a vertical direction,
- cantilever type air cylinder platforms (4) welded on and perpendicular to said gate-type trailer frame (3) and which extend in a horizontal direction,
- two vibrating air cylinders (5) aligned with said elastic cloth-vibrating devices (16), wherein one of the two vibrating air cylinders (5) is vertically mounted on each of said cantilever type air cylinder platforms (4),
- two air storage tanks (6),
- two electromagnetic valves (7) and
- a three-way joint (8) centrally mounted on the gate-type trailer frame (3) and which is externally connected with a high-pressure gas input hose; wherein each of the two electromagnetic valves (7) and each of the two gas storage tanks (6) are sequentially mounted between respectively one of the two vibrating air cylinders (5) and the three-way joint (8), wherein one of the two vibrating air cylinders (5) and an end of one of the two electromagnetic valves (7) are connected through an air conveying hose, an other end of the one of the electromagnetic valves (7) and an end of one of the two air storage tanks (6) are connected through an air conveying hose, an other end of the one of the two air storage tanks (6) and an end of the three-way joint (8) are connected through an air conveying hose, an other end of the three-way joint (8) and an end of the other one of the two air storage tanks (6) are connected through an air conveying hose, an other end of the other one of the two second air storage tanks (6) and an end of the other one of the two electromagnetic valves (7) are connected through an air conveying hose, an other end of the other one of the two electromagnetic valves (7) and the other one of the two vibrating air cylinders (5) are connected through an air conveying hose, and wherein the two electromagnetic valves (7) are externally connected with a PLC program control cabinet (23);
wherein each movable trailer seat (2) comprises:
- a trailer seat main body (9), wherein said trailer seat main body (9) is a C-shaped trailer seat with an opening facing towards a filter plate (15),
- a wear-resistant block (10), wherein the wear resistant block (10) is mounted at an upper part in the trailer seat main body (9),
- a pull-plate induction plate (11), wherein said pull-plate induction plate (11) is an angle steel plate, wherein two holes are formed in an upper edge of said pull-plate induction plate (11), and wherein a width of a front edge of the pull-plate induction plate (11) is larger than a wall thickness of the trailer seat main body (9) such that the pull-plate induction plate (11) blocks the wear-resistant block (10) from sliding outward; and
- a trailer pin assembly (12), wherein the trailer pin assembly (12) comprises two trailer connecting lugs and a trailer connecting pin, wherein a connecting pin inserting hole is formed in each of the two trailer connecting lugs, wherein each of the two trailer connecting lugs is welded to either side of a corresponding one of the movable trailer seats (2) and either side of a corresponding one of the two pull-plate trolleys (17) in a matched mode, and the trailer connecting pin is inserted into the connecting pin inserting holes of the two trailer connecting lugs;
B) wherein each elastic cloth-vibrating device (16) comprises:
- a cloth vibrating seat,
- a telescopic column mounted in the cloth vibrating seat,
- a cloth hanging rod assembly (18), and
- a reset spring which sleeves said telescopic column;
wherein the cloth hanging rod assembly (18) comprises:
- a filter cloth penetrating and hanging rod,
- a cloth pulling rod and
- a cloth hanging rod sleeve, wherein the cloth hanging rod sleeve is mounted on said telescopic column;
wherein the cloth vibrating seat is mounted on each side of an upper end of the filter plate (15) on which a filter cloth (19) is wrapped;
wherein the filter cloth (19) is hung on the filter cloth penetrating and hanging rod, wherein the filter cloth penetrating and hanging rod is mounted in the cloth hanging rod sleeve, and the cloth pulling rod is mounted at a lower end of the filter cloth (19) in a penetrating mode;
C) the trailer type pneumatic vibrating device (1) is hung on the two pull-plate trolleys (17) through the trailer pin assembly (12) and can synchronously move along with the two pull-plate trolleys (17);
when necessary, the pneumatic vibrating device (1) can also be unhooked and stopped at an edge of a machine tailstock (21); and
the trailer type pneumatic vibrating device has functions of automatic cloth vibration to assist cake removal and unhooking.

2. The automatic cloth-vibrating and cake-removing trailer according to claim 1, wherein an inner diameter of each trailer seat main body (9) is matched with each of the pull-plate trolley slide ways, and a length of each trailer seat main body (9) is greater than a width (thickness) of the gate-type trailer frame (3);
wherein each wear-resistant block (10) is a groove-shaped wear-resistant block (10), a groove opening of each wear-resistant block (10) is in clearance fit with a corresponding pull-plate trolley (17) slide way, a length of each wear-resistant block (10) corresponds to the inner diameter of the trailer seat main body (9), and each wear-resistant block (10) is formed by polypropylene injection molding.

3. The automatic cloth-vibrating and cake-removing trailer according to claim 1, wherein the gate-type trailer frame (3) is a double-layer gate-type frame, a connecting plate is arranged between two layers of the double-layer gate-type frame, triangular stabilizing plates are arranged at a left upper corner and a right upper corner, a width of the gate-type trailer frame (3) corresponds to a distance between the two pull-plate trolley (17) slide ways, a height of the gate-type trailer frame (3) adapts to the vibrating air cylinders (5) to vibrate the elastic cloth-vibrating devices (16), and a stainless steel square tube material is adopted; and
wherein vibrating air cylinder mounting holes are formed in the cantilever type air cylinder platforms (4), arm lengths of the cantilever type air cylinder platforms (4) adapt to the vibrating air cylinders (5) and can be aligned with the elastic cloth-vibrating devices (16), and the stainless steel square tube material is adopted.

4. An automatic cloth-vibrating and cloth-washing compatible filter press, being an automatic filter press compatible with cloth vibration and cloth washing, comprising
- a double-beam rack,
- a filter plate pressing mechanism,
- a multi-filter-chamber filtering mechanism,
- a pull-plate cake discharging mechanism,
- a cloth-vibrating and cake-removing trailer of the pull-plate cake discharging mechanism,
- a lifting type cloth washing mechanism (20),
- a liquid receiving plate overturning mechanism and
- a PLC program control system (23),
wherein the cloth-vibrating and cake-removing trailer is the automatic cloth-vibrating and cake-removing trailer according to claims 1 to 3; and
wherein the cloth-vibrating and cake-removing trailer has multiple functions of automatically pulling open the filter plates, automatically vibrating cloth to assist cake removal and automatically cleaning the filter cloth.

## Patentansprüche

1. Automatischer Tuchvibrations- und Kuchenentfernungsanhänger, umfassend:
- eine pneumatische Vibrationsvorrichtung (1 vom Anhängertyp und
- elastische Tuchvibrationsvorrichtungen (16),
A) wobei die pneumatische Vibrationsvorrichtung (1) vom Anhängertyp Folgendes umfasst:
- bewegliche Anhängeraufnahmen (2),
- einen Anhängerrahmen (3) vom Klappentyp, der an die beweglichen Anhängeraufnahmen (2) geschweißt ist und sich in einer vertikalen Richtung erstreckt,
- Luftzylinderplattformen (4) vom freitragenden Typ, die an den Anhängerrahmen (3) vom Klappentyp geschweißt sind und senkrecht dazu verlaufen und die sich in einer horizontalen Richtung erstrecken,
- zwei Vibrationsluftzylinder (5), die mit den elastischen Tuchvibrationsvorrichtungen (16) ausgerichtet sind, wobei einer der zwei Vibrationsluftzylinder (5) vertikal an jeder der Luftzylinderplattformen (4) vom freitragenden Typ montiert ist,
- zwei Luftspeicherbehälter (6),
- zwei elektromagnetische Ventile (7) und
- ein Dreiwegegelenk (8), das mittig an dem Anhängerrahmen (3) vom Klappentyp montiert ist und das extern mit einem Hochdruckgaseingangsschlauch verbunden ist; wobei jedes der zwei elektromagnetischen Ventile (7) und jeder der zwei Gasspeicherbehälter (6) nacheinander zwischen einem der zwei Vibrationsluftzylinder (5) bzw. dem Dreiwegegelenk (8) montiert ist, wobei einer der zwei Vibrationsluftzylinder (5) und ein Ende eines der zwei elektromagnetischen Ventile (7) durch einen Luftförderschlauch verbunden sind, ein anderes Ende des einen der elektromagnetischen Ventile (7) und ein Ende eines der zwei Luftspeicherbehälter (6) durch einen Luftförderschlauch verbunden sind, ein anderes Ende des einen der zwei Luftspeicherbehälter (6) und ein Ende des Dreiwegegelenks (8) durch einen Luftförderschlauch verbunden sind, ein anderes Ende des Dreiwegegelenks (8) und ein Ende des anderen einen der zwei Luftspeicherbehälter (6) durch einen Luftförderschlauch verbunden sind, ein anderes Ende des anderen einen der zwei zweiten Luftspeicherbehälter (6) und ein Ende des anderen einen der zwei elektromagnetischen Ventile (7) durch einen Luftförderschlauch verbunden sind, ein anderes Ende des anderen einen der zwei elektromagnetischen Ventile (7) und des anderen einen der zwei Vibrationsluftzylinder (5) durch einen Luftförderschlauch verbunden sind und wobei die zwei elektromagnetischen Ventile (7) extern mit einem SPS-Programmsteuerschrank (23) verbunden sind;
wobei jede bewegliche Anhängeraufnahme (2) Folgendes umfasst:
- einen Anhängeraufnahmenhauptkörper (9), wobei der Anhängeraufnahmenhauptkörper (9) eine C-förmige Anhängeraufnahme mit einer Öffnung ist, die zu einer Filterplatte (15) zeigt,
- einen verschleißfesten Block (10), wobei der verschleißfeste Block (10) an einem oberen Teil in dem Anhängeraufnahmenhauptkörper (9) montiert ist,
- eine Zugplatteninduktionsplatte (11), wobei die Zugplatteninduktionsplatte (11) eine Winkelstahlplatte ist, wobei zwei Löcher in einer oberen Kante der Zugplatteninduktionsplatte (11) gebildet sind und wobei eine Breite einer vorderen Kante der Zugplatteninduktionsplatte (11) größer als eine Wanddicke des Anhängeraufnahmenhauptkörpers (9) ist, sodass die Zugplatteninduktionsplatte (11) den verschleißfesten Block (10) daran hindert, nach außen zu gleiten; und
- eine Anhängerstiftbaugruppe (12), wobei die Anhängerstiftbaugruppe (12) zwei Anhängerverbindungsvorsprünge und einen Anhängerverbindungsstift umfasst, wobei ein Verbindungsstifteinführungsloch in jedem der zwei Anhängerverbindungsvorsprünge gebildet ist, wobei jeder der zwei Anhängerverbindungsvorsprünge in einem angepassten Modus an jede Seite einer entsprechenden einen der beweglichen Anhängeraufnahmen (2) und jede Seite eines entsprechenden einen der zwei Zugplattenwagen (17) geschweißt ist und der Anhängerverbindungsstift in die Verbindungsstifteinführungslöcher der zwei Anhängerverbindungsvorsprünge eingesetzt ist;
B) wobei jede elastische Tuchvibrationsvorrichtung (16) Folgendes umfasst:
- eine Tuchvibrationsaufnahme,
- eine Teleskopsäule, die auf der Tuchvibrationsaufnahme montiert ist,
- eine Tuchaufhängestangenbaugruppe (18) und
- eine Rückstellfeder, die die Teleskopsäule ummantelt;
wobei die Tuchaufhängestangenbaugruppe (18) Folgendes umfasst:
- eine Filtertuchdurchdringungs- und -aufhängestange,
- eine Tuchzugstange und
- eine Tuchaufhängestangenummantelung, wobei die Tuchaufhängestangenummantelung an der Teleskopsäule montiert ist;
wobei die Tuchvibrationsaufnahme auf jeder Seite eines oberen Endes der Filterplatte (15) montiert ist, auf der ein Filtertuch (19) umwickelt ist;
wobei das Filtertuch (19) an der Filtertuchdurchdringungs- und -aufhängestange aufgehängt ist, wobei die Filtertuchdurchdringungs- und -aufhängestange in der Tuchaufhängestangenummantelung montiert ist und die Tuchzugstange in einem Durchdringungsmodus an einem unteren Ende des Filtertuchs (19) montiert ist;
C) wobei die pneumatische Vibrationsvorrichtung (1) vom Anhängertyp durch die Anhängerstiftbaugruppe (12) an den zwei Zugplattenwagen (17) aufgehängt ist und sich synchron mit den zwei Zugplattenwagen (17) bewegen kann;
wobei, falls erforderlich, die pneumatische Vibrationsvorrichtung (1) auch an einer Kante eines Maschinenreitstocks (21) ausgehakt und angehalten werden kann; und
die pneumatische Vibrationsvorrichtung vom Anhängertyp Funktionen einer automatischen Tuchvibration aufweist, um das Entfernen und Aushaken von Kuchen zu unterstützen.

2. Automatischer Tuchvibrations- und Kuchenentfernungsanhänger nach Anspruch 1, wobei ein Innendurchmesser von jedem Anhängeraufnahmenhauptkörper (9) mit jeder der Zugplattenwagengleitführungen übereinstimmt und eine Länge von jedem Anhängeraufnahmenhauptkörper (9) größer als eine Breite (Dicke) des Anhängerrahmens (3) vom Klappentyp ist; wobei jeder verschleißfeste Block (10) ein nutförmiger verschleißfester Block (10) ist, eine Nutöffnung jedes verschleißfesten Blocks (10) in Spielpassung mit einer entsprechenden Gleitführung des Zugplattenwagens (17) ist, eine Länge jedes verschleißfesten Blocks (10) dem Innendurchmesser des Anhängeraufnahmenhauptkörpers (9) entspricht und jeder verschleißfeste Block (10) durch Polypropylen-Spritzgießen gebildet ist.

3. Automatischer Tuchvibrations- und Kuchenentfernungsanhänger nach Anspruch 1, wobei der Anhängerrahmen (3) vom Klappentyp ein doppellagiger Rahmen vom Klappentyp ist, eine Verbindungsplatte zwischen zwei Lagen des doppellagigen Rahmens vom Klappentyp angeordnet ist, dreieckige Stabilisatorplatten an einer linken oberen Ecke und einer rechten oberen Ecke angeordnet sind, eine Breite des Anhängerrahmens (3) vom Klappentyp einem Abstand zwischen den zwei Gleitführungen des Zugplattenwagens (17) entspricht, eine Höhe des Anhängerrahmens (3) vom Klappentyp sich den Vibrationsluftzylindern (5) anpasst, um die elastischen Tuchvibrationsvorrichtungen (16) zu vibrieren, und ein Vierkantrohrmaterial aus Edelstahl übernommen wird; und
wobei Vibrationsluftzylindermontagelöcher in den Luftzylinderplattformen (4) vom freitragenden Typ gebildet sind, sich die Armlängen der Luftzylinderplattformen (4) vom freitragenden Typ an die Vibrationsluftzylinder (5) anpassen und mit den elastischen Tuchvibrationsvorrichtungen (16) ausgerichtet werden können und das Vierkantrohrmaterial aus Edelstahl übernommen wird.

4. Automatische tuchvibrations- und tuchwaschkompatible Filterpresse, die eine automatische Filterpresse ist, die mit Tuchvibration und Tuchwäsche kompatibel ist, umfassend
- ein Doppelträgergestell,
- einen Filterplattendruckmechanismus,
- einen Filtermechanismus mit mehreren Filterkammern,
- einen Zugplatten-Kuchenentladungsmechanismus,
- einen Tuchvibrations- und Kuchenentfernungsanhänger des Zugplatten-Kuchenentladungsmechanismus,
- eine Tuchwaschmechanismus (20) vom Hebetyp,
- einen Flüssigkeitsaufnahmeplatten-Umstülpungsmechanismus und
- ein SPS-Programmsteuersystem (23),
wobei der Tuchvibrations- und Kuchenentfernungsanhänger der automatische Tuchvibrations- und Kuchenentfernungsanhänger nach den Ansprüchen 1 bis 3 ist; und
wobei der Tuchvibrations- und Kuchenentfernungsanhänger mehrere Funktionen zum automatischen Aufziehen der Filterplatten, automatischen Vibrieren des Tuches, um das Entfernen des Kuchens zu unterstützen, und automatischen Reinigen des Filtertuchs aufweist.

## Revendications

1. Remorque automatique d'élimination de gâteau et de vibration de tissu, comprenant :
- un dispositif vibrant pneumatique de type remorque (1), et
- des dispositifs vibrants à tissu élastique (16),
A) dans laquelle le dispositif vibrant pneumatique de type remorque (1) comprend :
- des sièges de remorque mobiles (2),
- un châssis de remorque de type porte (3) soudé sur les sièges de remorque mobiles (2) et qui s'étend dans une direction verticale,
- des plates-formes à vérin pneumatique de type cantilever (4) soudées sur et perpendiculaires audit châssis de remorque de type porte (3) et qui s'étendent dans une direction horizontale,
- deux cylindres pneumatiques vibrants (5) alignés avec lesdits dispositifs vibrants de tissu élastique (16), l'un des deux cylindres pneumatiques vibrants (5) étant monté verticalement sur chacune desdites plates-formes de cylindres pneumatiques de type cantilever (4),
- deux réservoirs de stockage d'air (6),
- deux électrovannes (7) et
- un raccord à trois voies (8) monté centralement sur le châssis de remorque de type porte (3) et qui est relié extérieurement à un tuyau d'entrée de gaz haute pression ; dans laquelle chacune des deux électrovannes (7) et chacun des deux réservoirs de stockage de gaz (6) sont montés séquentiellement entre respectivement l'un des deux cylindres pneumatiques vibrants (5) et le raccord à trois voies (8), dans laquelle l'un des deux cylindres pneumatiques vibrants (5) et une extrémité de l'une des deux électrovannes (7) sont reliés par un tuyau de transport d'air, une autre extrémité de l'une des électrovannes (7) et une extrémité de l'un des deux réservoirs de stockage d'air (6) sont reliées par un tuyau de transport d'air, une autre extrémité de l'un des deux réservoirs de stockage d'air (6) et une extrémité du raccord à trois voies (8) sont reliées par un tuyau de transport d'air, une autre extrémité du raccord à trois voies (8) et une extrémité de l'autre des deux réservoirs de stockage d'air (6) sont reliées par un tuyau de transport d'air, une autre extrémité de l'autre des deux seconds réservoirs de stockage d'air (6) et une extrémité de l'autre des deux électrovannes (7) sont reliées par un tuyau de transport d'air, une autre extrémité de l'autre des deux électrovannes (7) et l'autre des deux cylindres pneumatiques vibrants (5) sont connectés via un tuyau de transport d'air, et dans laquelle les deux électrovannes (7) sont reliées extérieurement à une armoire de commande de programme PLC (23) ;
dans laquelle chaque siège de remorque mobile (2) comprend :
- un corps principal de siège de remorque (9), ledit corps principal de siège de remorque (9) étant un siège de remorque en forme de C avec une ouverture orientée vers une plaque filtrante (15),
- un bloc résistant à l'usure (10), le bloc résistant à l'usure (10) étant monté sur une partie supérieure du corps principal du siège de remorque (9),
- une plaque d'induction à plaque de traction (11), ladite plaque d'induction à plaque de traction (11) étant une plaque d'angle en acier, deux trous étant formés dans le bord supérieur de ladite plaque d'induction à plaque de traction (11), et la largeur d'un bord avant de ladite plaque d'induction à plaque de traction étant supérieure à l'épaisseur de paroi du corps principal du siège de remorque (9), de sorte que la plaque d'induction à plaque de traction (11) empêche le bloc résistant à l'usure (10) de glisser vers l'extérieur ; et
- un ensemble de broches de remorque (12), dans laquelle l'ensemble de broches de remorque (12) comprend deux pattes de connexion de remorque et une broche de connexion de remorque, dans laquelle un trou d'insertion de broche de connexion est formé dans chacune des deux pattes de connexion de remorque, dans laquelle chacune des deux pattes de connexion de remorque est soudée de chaque côté d'un siège de remorque mobile correspondant (2) et de chaque côté d'un chariot à plaque de traction correspondant (17) dans un mode apparié, et la broche de connexion de remorque est insérée dans les trous d'insertion de broche de connexion des deux pattes de connexion de remorque ;
B) dans laquelle chaque dispositif vibrant de tissu élastique (16) comprend :
- un siège vibrant en tissu,
- une colonne télescopique montée dans le siège vibrant en tissu,
- un ensemble de tiges de suspension de tissu (18), et
- un ressort de rappel qui manchonne ladite colonne télescopique ;
dans laquelle l'ensemble de tige de suspension de tissu (18) comprend :
- une tige de pénétration et de suspension du tissu filtrant,
- une tige de traction en tissu et
- un manchon de tige de suspension de tissu, dans laquelle le manchon de tige de suspension de tissu est monté sur ladite colonne télescopique ;
dans laquelle le siège vibrant en tissu est monté de chaque côté d'une extrémité supérieure de la plaque filtrante (15) sur laquelle un tissu filtrant (19) est enroulé ;
dans laquelle le tissu filtrant (19) est suspendu à la tige de pénétration et de suspension du tissu filtrant, dans laquelle la tige de pénétration et de suspension du tissu filtrant est montée dans le manchon de tige de suspension du tissu, et la tige de traction du tissu est montée à une extrémité inférieure du tissu filtrant (19) dans un mode pénétrant ;
C) le dispositif vibrant pneumatique de type remorque (1) est suspendu aux deux chariots à plaque de traction (17) par l'intermédiaire de l'ensemble de broches de remorque (12) et peut se déplacer de manière synchrone avec les deux chariots à plaque de traction (17) ;
si nécessaire, le dispositif vibrant pneumatique (1) peut également être décroché et arrêté au bord d'une contre-pointe de machine (21) ; et le dispositif vibrant pneumatique de type remorque a des fonctions de vibration automatique du tissu pour aider au retrait et au décrochage du gâteau.

2. Remorque automatique d'élimination de gâteau et de vibration de tissu selon la revendication 1, dans laquelle un diamètre intérieur de chaque corps principal de siège de remorque (9) est adapté à chacune des glissières de chariot à plaque de traction, et une longueur de chaque corps principal de siège de remorque (9) est supérieure à une largeur (épaisseur) du châssis de remorque de type porte (3) ;
dans laquelle chaque bloc résistant à l'usure (10) est un bloc résistant à l'usure en forme de rainure (10), une ouverture de rainure de chaque bloc résistant à l'usure (10) est en ajustement libre avec une glissière de chariot à plaque de traction correspondante (17), une longueur de chaque bloc résistant à l'usure (10) correspond au diamètre intérieur du corps principal du siège de remorque (9), et chaque bloc résistant à l'usure (10) est formé par moulage par injection de polypropylène.

3. Remorque automatique d'élimination de gâteau et de vibration de tissu selon la revendication 1, dans laquelle le châssis de remorque de type porte (3) est un châssis de type porte à double couche, une plaque de liaison est disposée entre deux couches du châssis de type porte à double couche, des plaques de stabilisation triangulaires sont disposées dans un coin supérieur gauche et un coin supérieur droit, une largeur du châssis de remorque de type porte (3) correspond à une distance entre les deux glissières du chariot à plaque de traction (17), une hauteur du châssis de remorque de type porte (3) s'adapte aux cylindres pneumatiques vibrants (5) pour faire vibrer les dispositifs vibrants de tissu élastique (16), et un matériau de tube carré en acier inoxydable est adopté ; et
dans laquelle des trous de montage de cylindre pneumatiques vibrants sont formés dans les plates-formes de cylindre pneumatiques de type cantilever (4), les longueurs de bras des plates-formes de cylindre pneumatiques de type cantilever (4) s'adaptent aux cylindres pneumatiques vibrants (5) et peuvent être alignées avec les dispositifs vibrants en tissu élastique (16), et le matériau de tube carré en acier inoxydable est adopté.

4. Filtre-presse automatique compatible avec la vibration et le lavage du tissu, comprenant
- une crémaillère à double poutre,
- un mécanisme de pressage de plaque filtrante,
- un mécanisme de filtrage à chambres multi-filtres,
- un mécanisme de déchargement du gâteau à plaque de traction,
- une remorque vibrante et décapante en tissu du mécanisme de déchargement du gâteau à plaque de traction,
- un mécanisme de lavage de tissu de type élévateur (20),
- un mécanisme de retournement de la plaque de réception de liquide et
- un système de contrôle de programme PLC (23),
dans lequel la remorque d'élimination de gâteau et de vibration de tissu est la remorque automatique d'élimination de gâteau et de vibration de tissu selon les revendications 1 à 3 ; et
dans lequel la remorque automatique d'élimination de gâteau et de vibration de tissu a de multiples fonctions d'ouverture automatique des plaques filtrantes, de vibration automatique du tissu pour aider au retrait du gâteau et de nettoyage automatique du tissu filtrant.
